# FASCICULE DE BREVET EUROPEEN

(11) **EP 1 949 485 B1**
(45) Date de publication et mention de la délivrance du brevet: **04.03.2009**
(21) Numéro de dépôt: 06807428.5
(22) Date de dépôt: 20.10.2006
(51) Int. Cl.: H01M 10/04, H01M 10/12

(54) **PROCEDE DE COMPRESSION D'UN EMPILEMENT D'ELECTRODES D'UN ACCUMULATEUR PAR UN SACHET, ACCUMULATEUR ET SACHET CORRESPONDANTS**
VERFAHREN ZUM KOMPRIMIEREN EINES ELEKTRODENSTAPELS EINER SPEICHERBATTERIE UNTER VERWENDUNG EINES BEUTELS UND ENTSPRECHENDE SPEICHERBATTERIE UND ENTSPRECHENDER BEUTEL
METHOD OF COMPRESSING AN ELECTRODE STACK OF A STORAGE BATTERY USING A BAG AND CORRESPONDING STORAGE BATTERY AND BAG

(30) Priorité: 20.10.2005 FR 0510704
(43) Date de publication de la demande: 30.07.2008
(73) Titulaire: Electricité de France, 75008 Paris (FR); CEAC, Compagnie Europeenne d'Accumulateurs, 92230 Gennevilliers (FR)
(72) Inventeur: TORCHEUX, Laurent, F-91800 Brunoy (FR); CAMPS, Jean-Claude, F-77130 Misy Sur Yonne (FR); SARRAU, Jean-François, F-75017 Paris (FR); BENCHETRITE, Daniel, 94000 Créteil (FR)
(74) Mandataire: Texier, Christian
(86) Numéro de dépôt international: PCT/EP2006/067609
(87) Numéro de publication internationale: WO 2007/045685

(56) Documents cités:
- WO-A-95/15584
- WO-A-97/30486
- GB-A- 954 296
- US-A- 4 188 462
- US-A- 5 670 272
- US-A- 5 916 709
- US-A- 6 040 085

## Description

### DOMAINE TECHNIQUE GENERAL

La présente invention concerne un procédé de compression d'un empilement d'électrodes d'un accumulateur, comportant une étape consistant à placer l'empilement à l'intérieur d'un bac de l'accumulateur.

L'invention concerne également un accumulateur et un sachet mis dans un tel accumulateur.

### ETAT DE L'ART

Il est connu d'exercer une force de compression sur un empilement d'électrodes d'un accumulateur, utilisé par exemple dans le domaine automobile, pour améliorer les performances de l'accumulateur, notamment son endurance en cyclage.

Une telle méthode et un tel accumulateur sont connus de WO 95/15584 par exemple. Ils sont repris schématiquement à la figure 1.

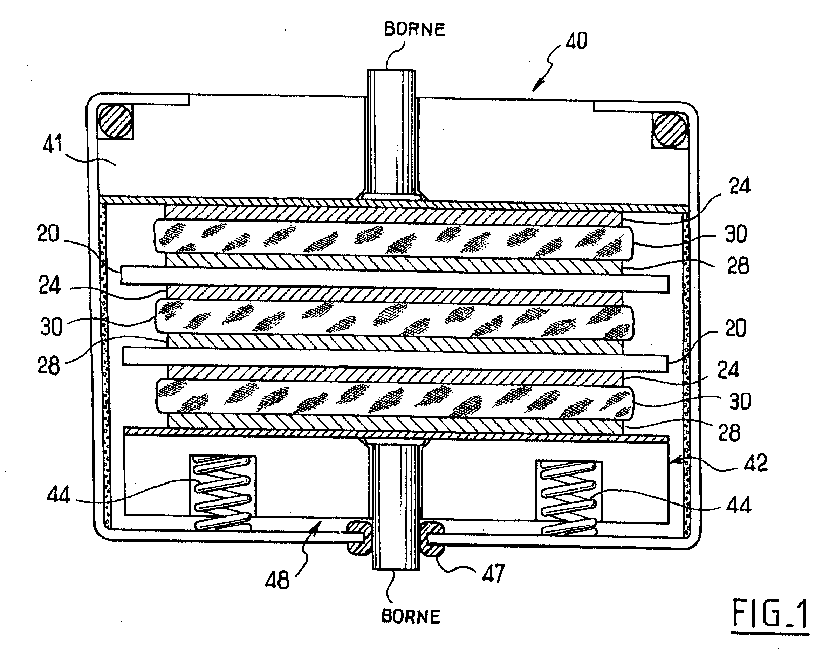

La figure 1 représente un accumulateur connu comportant un bac 40 contenant un empilement 48 d'une pluralité d'électrodes 24 et 28. Chaque couple d'électrodes 24 et 28 est compris dans une cellule et l'empilement 48 est constitué d'une pluralité cellules. L'accumulateur comporte en outre deux bornes, chaque borne étant située à une extrémité de l'empilement 48 d'électrodes 24 et 28.

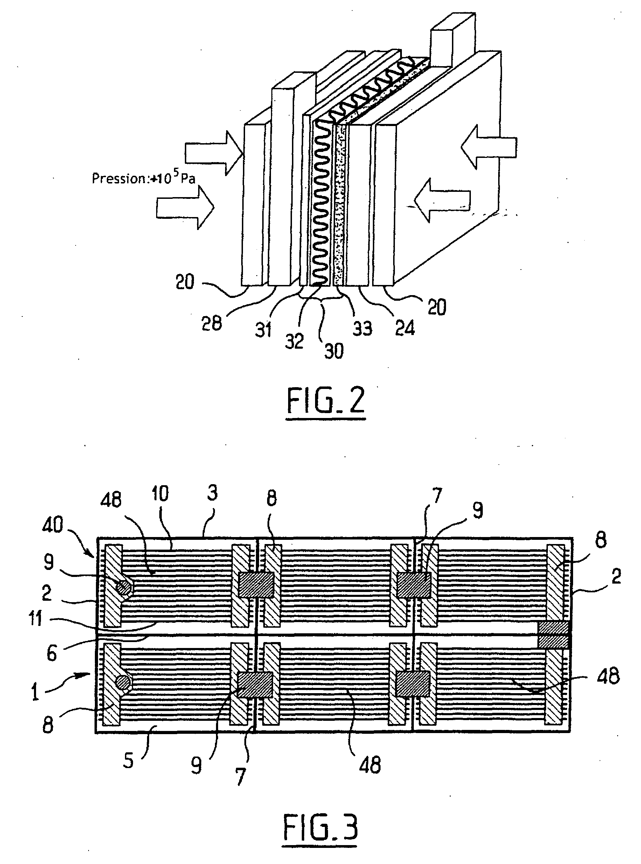

La figure 2 représente schématiquement un exemple d'une cellule de l'empilement 48 d'un accumulateur. Chaque cellule comporte une plaque bipolaire 20 sur laquelle vient prendre appui une électrode positive 28, un séparateur 30, une électrode négative 24 et à nouveau une plaque bipolaire 20.

Le séparateur peut généralement être composé d'une couche de polyéthylène (PE) microporeux pour les batteries dites « ouvertes », ou être composé d'une couche de feutre de laine de verre imbibé (« glass mat » selon la terminologie anglaise) ou encore être un écarteur ondulé perforé en polychlorure de vinyle (PVC) pour les batteries à recombinaison dites « étanches ». Il existe également moins généralement des combinaisons de séparateurs combinant plusieurs de ces matériaux ; par exemple des feuilles de PE combinées à des couches de laine de verre, ou une combinaison selon la figure 2. Sur la figure 2, le séparateur 30 est composé d'une couche 31 constituée d'une feuille plane de polyéthylène microporeux sur laquelle est posé un écarteur ondulé perforé 32. L'écarteur ondulé 32 supporte à son tour une couche 33 de laine de verre.

Le séparateur 30 permet de séparer mécaniquement les électrodes positives 28 et négatives 24 tout en permettant une jonction électrolytique.

La figure 1 illustre une méthode de disposition de l'empilement d'électrodes 48 dans le bac 40, pour exercer une force de compression constante et uniforme entre les plaques bipolaires 20 et des séparateurs 30 constituant l'empilement 48.

L'empilement 48 d'électrodes est lié à une première plaque d'extrémité 41 formant collecteur de courant et une deuxième plaque d'extrémité 42 formant également collecteur de courant.

La première plaque 41 est fixe par rapport au bac 40.

La deuxième plaque d'extrémité 42 est supportée par une pluralité de ressorts 44 qui fournissent une force de compression de l'empilement 48. Les ressorts 44 permettent d'exercer une force de compression, notamment sur les séparateurs 30.

Dans le mode de réalisation connu de la figure 1, la borne reliée à la plaque 42 sollicitée par les ressorts 44 glisse dans des moyens de scellage 47 du bac.

Le dispositif de compression selon la figure 1 comportant des ressorts 44 présente des inconvénients.

Un tel dispositif est encombrant, et sa mise en place dans un bac d'un accumulateur se fait au détriment du nombre de cellules dans l'empilement.

Il est notamment difficile de mettre en place un tel dispositif de compression dans un accumulateur traditionnel non bipolaire comportant un bac 40 divisé en plusieurs compartiments et comportant un empilement 48 dans chaque compartiment, comme cela est représenté schématiquement à la figure 3.

En effet, un espace 5 entre un empilement 48 et des parois latérales 3 ou internes 6 délimitant les compartiments du bac 40 est souvent inférieur à 5 mm. L'espace 5 n'est pas suffisant pour permettre l'installation du dispositif de compression de la figure 1 ou alors il faut supprimer des cellules de l'empilement.

De plus, la mise en place d'un dispositif selon la figure 1 dans un bac 40 selon la figure 3 provoque des difficultés d'insertion. Ladite insertion est contraignante et coûteuse pour la fabrication industrielle.

Une adaptation du bac est nécessaire pour le montage d'un dispositif 47 de scellage visible à la figure 1. Le dispositif 47 est difficile à réaliser techniquement, et est donc onéreux.

US-A- 5 670 272 et US-A- 6 040 085 divulguent un accumulateur dans lequel un matériau dilatable est introduit dans un sachet placé dans l'accumulateur.

### PRESENTATION DE L'INVENTION

L'invention propose de pallier au moins un des inconvénients cités précédemment.

A cet effet, on propose selon l'invention un procédé de compression d'un empilement d'électrodes d'un accumulateur selon la revendication 1.

L'invention est avantageusement complétée par les caractéristiques des revendications 1 à 5, prises seules ou en une quelconque de leur combinaison techniquement possible.

L'invention concerne également un accumulateur et un sachet de compression correspondants.

L'invention présente de nombreux avantages.

Elle permet notamment le montage facile et peu onéreux d'un dispositif de compression dans un bac d'un accumulateur.

Le bac de l'accumulateur reste standard et n'a besoin d'aucune adaptation hormis un renforcement de son épaisseur ou l'éventuel ajout d'un système extérieur de maintien des côtés.

L'invention permet l'obtention d'une force de compression élastique constante. La variation du volume de l'empilement d'électrodes est donc permise, ce qui limite un fluage et permet un meilleur rendement dans les cycles de l'accumulateur.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement une coupe d'un accumulateur connu comportant un seul empilement d'électrodes, et un procédé pour appliquer une force de compression audit empilement ;
- la figure 2, déjà commentée également, représente schématiquement un couple d'électrodes connues, séparées par un séparateur connu ;
- la figure 3, déjà commentée aussi, représenté un bac connu d'un accumulateur comportant une pluralité de compartiments, chaque compartiment comportant un empilement d'électrodes ;
- la figure 4 représente schématiquement un accumulateur selon la figure 3 comportant un sachet de compression selon l'invention ;
- la figure 5 représente une vue de profil d'un sachet selon l'invention ;
- les figures 6a et 6b représentent schématiquement une coupe transversale d'un sachet selon la figure 5, respectivement dans une position comprimée et dans une position dilatée ; et
- la figure 7 représente schématiquement en coupe un séparateur pouvant être avantageusement mis dans un empilement d'électrodes.

Sur l'ensemble des figures, les éléments similaires portent des références numériques identiques.

### DESCRIPTION DETAILLEE

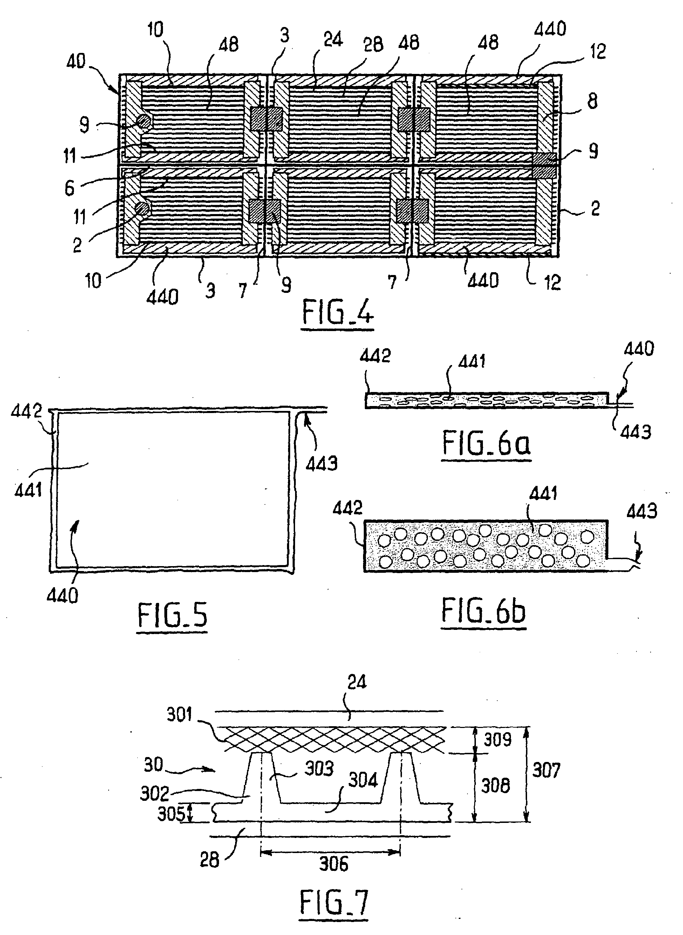

La figure 4 illustre schématiquement un exemple d'un procédé de compression mis en oeuvre dans un accumulateur comportant au moins un empilement 48 d'électrodes 24 et 28, disposés en cellules.

Dans l'exemple de la figure 4, l'accumulateur comporte un bac 40 avec des parois externes longitudinales 3 et des parois externes transverses 2.

Le bac 40 comporte par exemple six compartiments, recevant chacun un empilement 48.

Les compartiments sont délimités par une paroi interne longitudinale médiane 6 intersectant des parois internes transverses 7. Bien entendu, on peut aussi envisager des bacs en ligne, et l'exemple de bac de la présente description n'est pas limitatif.

On référence par 10 et 11 les faces longitudinales des empilements 48.

Des cadres 8 perpendiculaires aux faces 10 et 11 permettent de maintenir les électrodes 24 et 28 ensemble. Les cadres 8, qui assurent la connexion électrique entre les électrodes 24 et 28, sont reliés à une partie 9 (soudure inter éléments) qui permet la connexion électrique entre les différents éléments de la batterie. Les empilements 48 sont supportés dans chaque compartiment par les cadres 8 et la partie 9.

Comme le montre la figure 4, un procédé selon l'invention consiste à placer au moins un matériau élastique 441, comprimé dans un sachet 440, entre une paroi du bac 40 et l'empilement 48. Le sachet 440 est scellé et maintien le matériau dans un état comprimé.

Préférentiellement, on place un tel sachet 440 entre une face 10 et une paroi externe 3 et une face 11 de l'empilement et une paroi interne 6.

Il est facile de placer le matériau élastique entre la paroi et l'empilement, du fait qu'il est comprimé dans un sachet. On peut insérer le sachet dans un espace inférieur à 5 mm.

Une fois le sachet 440 en place entre au moins une paroi et l'empilement, on forme une ouverture dans le sachet. Par exemple, on détériore le sachet 440.

En formant une ouverture, on détériore l'étanchéité par exemple du sachet 440. Un gaz ou un liquide peut ainsi pénétrer dans le sachet et permettre au matériau de se dilater et exercer une force de compression sur l'empilement 48 en prenant appui sur la paroi du bac.

La pression exercée par le matériau correspond à une pression de 0,1 à 1 kg/cm², soit 0,01 à 0,1 MPa.

Une fois le sachet 440 ouvert ou détérioré, la dilatation du matériau 441 permet à la force de compression élastique de s'exercer sur l'empilement, pour un meilleur rendement et de meilleures performances de l'accumulateur, notamment son endurance en cyclage.

L'invention permet un accroissement d'un facteur compris entre 5 et 10 environ sur l'endurance en cyclage.

De façon préférentielle, le matériau élastique est un matériau poreux initialement comprimé sous vide ou mécaniquement dans un sachet dont les faces sont initialement hermétiques aux gaz. On comprime ainsi le matériau et on scelle le sachet avant son placement dans le bac.

Les figures 5, 6a et 6b représentent un mode préférentiel de réalisation d'un sachet selon l'invention.

Le sachet 440 comporte des faces 442 hermétiques aux gaz mais dans lesquelles on peut former une ouverture. Les faces 442 sont par exemple aptes à être détériorées.

Le sachet comporte un matériau 441 élastique comprimé sous vide ou mécaniquement sur la figure 6a, par exemple un matériau poreux. La figure 6b montre que le matériau 441 est apte à se dilater après formation d'une ouverture, par détérioration par exemple des faces 442 du sachet. On peut également former une ouverture par d'autres moyens, sans détérioration des faces.

Une détérioration des faces du sachet peut s'effecteur en déchirant, en coupant au moins en partie ou en perçant le sachet. On rompt ainsi par exemple l'étanchéité du sachet.

Avantageusement, le sachet comporte une languette 443 facilitant la déchirure des faces du sachet et leur éventuel rescellage comme on le verra par la suite.

L'accumulateur est soumis à des conditions de température très variables. Globalement, le matériau de compression et ses caractéristiques doivent être stables pour une gamme de températures comprises entre - 20°C et +80°C. Il est plongé dans une solution d'acide sulfurique dont la concentration varie de 0,5 à 5 mol/L.

Le matériau de compression doit donc être stable en milieu d'acide sulfurique. Le matériau de compression doit également maintenir l'ensemble de ces propriétés pour une durée équivalente à la durée de vie calendaire de l'accumulateur, soit plus de cinq ans pour une température moyenne de l'ordre de 25°C.

Le matériau 441 est avantageusement choisi parmi une mousse de polyuréthane réticulé, une mousse ouverte d'un élastomère ou d'un caoutchouc, ou une structure en nid d'abeilles d'un matériau précité, à savoir un polyuréthane réticulé, un élastomère ou un caoutchouc.

D'autres matériaux sont également possibles.

On scelle de nouveau le sachet après sa détérioration si le matériau 441 est moyennement stable en milieu acide sulfurique. On évite ainsi tout contact du matériau avec l'acide sulfurique. On peut également refermer l'ouverture formée dans le sachet.

Avantageusement, les faces du sachet sont en polypropylène et/ou polyéthylène, stable en milieu acide sulfurique.

La figure 7 montre des séparateurs 30 avantageux placés entre les électrodes 24 et 28 de l'empilement différents de ceux de la figure 2.

Chaque séparateur 30 est composé d'une superposition d'une couche de feutre 301 collée sur une couche nervurée 302. Avantageusement, la couche de feutre 301 est de la laine de verre et la couche nervurée 302 est en polyéthylène.

La couche nervurée 302 comporte une plaque 304 comportant des nervures 303 régulièrement espacées. La distance 306 entre chaque nervure est préférentiellement comprise entre 3,5 et 4 mm. La plaque 304 a une épaisseur 305 de l'ordre de 0,5 mm. La hauteur totale des nervures 303 par rapport à la base de la plaque 304 est une hauteur 308 de l'ordre de 1,5 à 1,75 mm. L'épaisseur 309 de la couche 301 de feutre est de l'ordre de 0,7 mm. L'épaisseur 307 totale du séparateur 30 est de l'ordre de 2,2 à 2,45 mm. Bien entendu, les dimensions précédentes sont données à titre d'exemples non limitatifs.

Comme le montre la figure 4, il est possible d'améliorer le calage ou la pré-compression de l'empilement d'électrodes en plaçant une cale 12, soit entre un sachet 440 et une paroi 3 ou 6, soit entre un sachet et un empilement 48. On évite aussi par la cale 12 la déformation d'un bac non renforcé.

La figure 4 montre un exemple d'accumulateur comportant six compartiments, mais le nombre de compartiments peut être quelconque.

## Revendications

1. Procédé de compression d'un empilement (48) d'électrodes (24, 28) d'un accumulateur, comportant une étape consistant à placer l'empilement à l'intérieur d'un bac (40) de l'accumulateur, **caractérisé en ce qu'**il comporte en outre les étapes consistant à :
- placer un sachet (440) contenant initialement un matériau élastique (441) poreux comprimé sous vide ou mécaniquement, le sachet étant initialement hermétique aux gaz, entre au moins une paroi (3, 6) du bac (40) et l'empilement (48) ;
- former une ouverture dans le sachet (440) en détériorant le sachet (440), de sorte que le matériau initialement comprimé dans le sachet se dilate et exerce une force de compression sur l'empilement (48) en prenant appui sur la paroi (3, 6) du bac (40).

2. Procédé selon la revendication précédente, dans lequel on forme l'ouverture en déchirant le sachet, le coupant au moins en partie ou en le perçant.

3. Procédé selon l'une des revendications précédentes dans lequel on rescelle le sachet après sa détérioration.

4. Procédé selon l'une des revendications précédentes, dans lequel on place des séparateurs (30) entre les électrodes (24, 28) de l'empilement, les séparateurs étant composés d'une superposition d'une couche de feutre (301) collée sur couche nervurée (302).

5. Procédé selon l'une des revendications précédentes, dans lequel on place une cale (12) entre le sachet (440) et la paroi (3, 6) ou entre le sachet et l'empilement.

6. Sachet destiné à la compression d'un empilement (48) d'électrodes (24, 28) d'un accumulateur, comportant des faces (442) dans lesquelles on peut former une ouverture, comportant un matériau élastique (441) comprimé, le matériau étant apte à se dilater après formation d'une ouverture dans les faces (442) du sachet, **caractérisé en ce qu'**il comporte une languette (443) facilitant la formation de l'ouverture dans les faces (442) ou le rescellage des faces.

7. Sachet selon la revendication précédente, dans lequel le matériau est comprimé sous vide ou mécaniquement.

8. Sachet selon l'une des deux revendications précédentes, dans lequel les faces (442) sont initialement hermétiques aux gaz, mais sont aptes à être détériorées pour la formation de l'ouverture, de sorte que la détérioration des faces rompe une étanchéité du sachet.

9. Sachet selon l'une des trois revendications précédentes, dans lequel les faces (442) sont en polypropyléne et/ou polyéthylène, et le matériau est un matériau poreux qui est choisi parmi une mousse de polyuréthane réticulé, une mousse ouverte d'un élastomère ou d'un caoutchouc, ou une structure en nid d'abeilles de polyuréthane réticulé, d'un élastomère ou d'un caoutchouc.

10. Accumulateur comportant :
- un bac (40),
- au moins un empilement (48) d'électrodes (24, 28), l'empilement étant placé à l'intérieur du bac, et
- au moins un sachet (440) contenant un matériau élastique (441) entre une paroi (3, 6) du bac (40) et l'empilement (48), de sorte que le matériau exerce une force de compression sur l'empilement (48) en prenant appui sur la paroi (3, 6) du bac (40), **caractérisé en que** ce le sachet (440) est selon l'une des revendications 6 à 9.

11. Accumulateur selon la revendication précédente, dans lequel l'empilement comporte des séparateurs (30) entre les électrodes (24, 28), les séparateurs étant composés d'une superposition d'une couche de feutre (301) collée sur couche nervurée (302).

## Claims

1. Method of compressing a stack (48) of electrodes (24, 28) of an accumulator, comprising a step consisting of placing the stack inside a case (40) of the accumulator, **characterised in that** it also comprises the steps consisting of:
- placing a sachet (440) containing initially a porous elastic material (441) compressed under vacuum or mechanically, the sachet being initially gastight, between at least one wall (3, 6) of the case (40) and the stack (48);
- forming an opening in the sachet (440), damaging the sachet (440) so that the material initially compressed in the sachet expands and exerts a compression force on the stack (48) while bearing on the wall (3, 6) of the case (40).

2. Method according to the preceding claim, in which the opening is formed by tearing the sachet, cutting it at least partly or piercing it.

3. Method according to one of the preceding claims, in which the sachet is resealed after the damage thereto.

4. Method according to one of the preceding claims, in which separators (30) are placed between the electrodes (24, 28) of the stack, the separators being composed of a superimposition of a layer of felt (301) bonded to a ribbed layer (302).

5. Method according to one of the preceding claims, in which a shim (12) is placed between the sachet (440) and the wall (3, 6) or between the sachet and the stack.

6. Sachet intended for compressing a stack (48) of electrodes (24, 28) of an accumulator, comprising faces (442) in which an opening can be formed, comprising a compressed elastic material (441), the material being able to expand after the formation of an opening in the faces (442) of the sachet, **characterised in that** it comprises a tongue (443) facilitating the formation of the opening in the faces (442) or the resealing of the faces.

7. Sachet according to the preceding claim, in which the material is compressed under vacuum or mechanically.

8. Sachet according to one of the previous two claims, in which the faces (442) are initially gastight but are able to be damaged in order form the opening, so that damage to the faces breaks the seal on the sachet.

9. Sachet according to one of the previous three claims, in which the faces (442) are made from polypropylene and/or polyethylene, and the material is a porous material that is chosen from a cross-linked polyurethane foam, an open foam of an elastomer or rubber, or a honeycomb structure of cross-linked polyurethane, an elastomer or a rubber.

10. Accumulator comprising:
- a case (40),
- at least one stack (48) of electrodes (24, 28), the stack being placed inside the case, and
- at least one sachet (440) containing an elastic material (441) between a wall (3, 6) of the case (40) and the stack (48), so that the material exerts a compression force on the stack (48) while bearing on the wall (3, 6) of the case (40), **characterised in that** the sachet (440) is in accordance with claims 6 to 9.

11. Accumulator according to the preceding claim, in which the stack comprises separators (30) between the electrodes (24, 28), the separators being composed of a superimposition of a layer of felt (301) bonded to a ribbed layer (302).

## Patentansprüche

1. Verfahren zum Komprimieren eines Stapels (48) Elektroden (24, 28) eines Akkumulators, umfassend einen Schritt, der im Anordnen des Stapels im Inneren eines Kastens (40) des Akkumulators besteht, **dadurch gekennzeichnet, dass** es des Weiteren folgende Schritte umfasst:
- das Anordnen eines Beutels (440), der anfangs ein poröses, elastisches Material (441) enthält, das unter Vakuum oder mechanisch komprimiert wird, wobei der Beutel anfangs gasdicht verschlossen ist, zwischen mindestens einer Wand (3, 6) des Kastens (40) und dem Stapel (48);
- das Ausbilden einer Öffnung im Beutel (440) durch Kaputtmachen des Beutels (440), sodass sich das Material, welches anfangs im Beutel komprimiert ist, ausdehnt und auf den Stapel (48) eine Kompressionskraft ausübt, indem es gegen die Wand (3, 6) des Kastens (40) drückt.

2. Verfahren nach dem vorhergehenden Anspruch, wobei die Öffnung durch Zerreißen, teilweises Zerschneiden oder durch Löchern des Beutels gebildet wird.

3. Verfahren nach einem der vorhergehenden Ansprüche, wobei der Beutel nach seinem Kaputtmachen wieder versiegelt wird.

4. Verfahren nach einem der vorhergehenden Ansprüche, wobei Separatoren (30) zwischen den Elektroden (24, 28) des Stapels angeordnet werden, wobei die Separatoren aus einer Übereinanderlagerung bestehen, bei der eine Filzschicht (301) auf eine Rillenschicht (302) aufgeklebt ist.

5. Verfahren nach einem der vorhergehenden Ansprüche, wobei eine Zwischenlage (12) zwischen dem Beutel (440) und der Wand (3, 6) oder zwischen dem Beutel und dem Stapel angeordnet wird.

6. Beutel für die Kompression eines Stapels (48) Elektroden (24, 28) eines Akkumulators, umfassend Flächen (442), auf denen eine Öffnung gebildet werden kann, umfassend ein komprimiertes, elastisches Material (441), wobei das Material imstande ist, sich nach Bildung einer Öffnung auf den Flächen (442) des Beutels auszudehnen, **dadurch gekennzeichnet, dass** er eine Lasche (443) umfasst, die die Bildung der Öffnung auf den Flächen (442) oder das Wiederversiegeln der Flächen erleichtert.

7. Beutel nach dem vorhergehenden Anspruch, wobei das Material unter Vakuum oder mechanisch komprimiert wird.

8. Beutel nach einem der zwei vorhergehenden Ansprüche, wobei die Flächen (442) anfangs gasdicht verschlossen, aber imstande sind, für die Bildung der Öffnung kaputtgemacht zu werden, sodass das Kaputtmachen der Flächen eine Dichtheit des Beutels bricht.

9. Beutel nach einem der drei vorhergehenden Ansprüche, wobei die Flächen (442) aus Polypropylen und/oder Polyethylen hergestellt sind, und das Material ein poröses Material ist, das aus einem vernetzten Polyurethanschaum, einem offenzelligen Schaum aus einem Elastomer oder einem Kautschuk, oder einer wabenartigen Struktur aus vernetztem Polyurethan, einem Elastomer oder einem Kautschuk gewählt wird.

10. Akkumulator, umfassend:
- einen Kasten (40),
- mindestens einen Stapel (48) Elektroden (24, 28), wobei der Stapel im Inneren des Kastens angeordnet ist, und
- mindestens einen Beutel (440), der ein elastisches Material (441) enthält, zwischen einer Wand (3, 6) des Kastens (40) und dem Stapel (48), sodass das Material auf den Stapel (48) eine Kompressionskraft ausübt, indem es gegen die Wand (3, 6) des Kastens (40) drückt, **dadurch gekennzeichnet, dass** der Beutel (440) einem der Ansprüche 6 bis 9 entspricht.

11. Akkumulator nach dem vorhergehenden Anspruch, wobei der Stapel zwischen den Elektroden (24, 28) Separatoren (30) aufweist, wobei die Separatoren aus einer Übereinanderlagerung bestehen, bei der eine Filzschicht (301) auf eine Rillenschicht (302) aufgeklebt ist.
